# EUROPEAN PATENT SPECIFICATION

(11) **EP 1 969 817 B1**
(45) Date of publication and mention of the grant of the patent: **19.09.2012**
(21) Application number: 06830588.7
(22) Date of filing: 13.12.2006
(51) Int. Cl.: H04L 29/08, G06F 17/30

(54) **METHOD AND SYSTEM FOR EXTERNALIZING HTTP SECURITY MESSAGE HANDLING WITH MACRO SUPPORT**
VERFAHREN UND SYSTEM ZUR EXTERNALISIERUNG DER BEHANDLUNG DER HTTP-SICHERHEITSNACHRICHTEN MIT MAKRO-UNTERSTÜTZUNG
PROCEDE ET SYSTEME PERMETTANT D'EXTERNALISER LE TRAITEMENT DE MESSAGES DE SECURITE HTTP A L'AIDE D'UN SUPPORT MACRO

(30) Priority: 16.12.2005 US 303139
(43) Date of publication of application: 17.09.2008
(73) Proprietor: International Business Machines Corporation, Armonk, NY 10504 (US)
(72) Inventor: HARMON, Benjamin, Brewer c/o IBM UK Ltd., Winchester, Hampshire SO21 2JN (GB); HINTON, Heather, Maria, Austin, Texas 78732 (US); MILMAN, Ivan, Matthew, Austin, Texas 78759-7322 (US); MORAN, Anthony, Scott, Santa Cruz, California 95060 (US); VANDENWAUVER, Mark c/o IBM United Kingdom Limited Intellectual Property Law, Winchester Hampshire SO21 2JN (GB)
(74) Representative: Pyecroft, Justine Nicola C.
(86) International application number: PCT/EP2006/069654
(87) International publication number: WO 2007/068717

(56) References cited:
- WO-A-02/073464
- GB-A- 2 331 600
- US-A1- 2005 055 434

## Description

### BACKGROUND OF THE INVENTION

### Field of the Invention

The present invention relates to an improved data processing system and, in particular, to a method and apparatus for multicomputer data transferring.

### Description of Related Art

E-commerce web sites and web applications perform transactions over computer networks on behalf of users. Enterprises generally desire to provide authorized users with secure access to protected resources in a user-friendly manner throughout a variety of networks, including the Internet. In an e-commerce web-based environment, computer systems often implement authentication services as a form of front door or sentry gate for accessing a web site. A user must often pass through an authentication procedure in order to prove the user's identity to an appropriate level of certainty for security purposes. These authentication services sit in front of applications, i.e. between the user and the applications, to ensure that the user is authenticated before obtaining access to any resources. These authentication services may be implemented as a web server plug-in, a reverse proxy, or other similar technology. Enterprises desire to support a variety of clients, including mobile devices, such as cell phones, PDAs (Portable Digital Assistants), etc., that browse the web with specialized lightweight browsers, along with fixed devices that operate standard web browsers.

However, some implementation constraints in proxy components inhibit the support of multiple different devices at any given installation. The problem centers around the static content that is served from a proxy server itself when information about a security-relevant event, needs to be sent to a client, such as a message informing the user that a login is required or some type of error message. For example, a user may desire to use a PDA to access content on an enterprises intranet, but all of the content on the intranet is protected by a proxy server. When the user clicks on a link that requires a logon operation, the proxy server may return a static login HTML (HyperText Markup Language) form to the PDA. Unfortunately, the browser on the PDA may only be able to handle content that has already been tailored for mobile devices, and the PDA may not be able to process the entire HTML form or some portion thereof. Hence, the user cannot logon to the intranet.

The following solutions or workarounds have been suggested to address the problem of appropriate content to a variety of devices. With respect to the above-noted logon problem, the logon form and other static forms that are served up by a proxy server could include a "META" tag with a redirect to a page that is encoded for mobile devices or to a servlet that can distinguish the type of browser on a target device and then generate the appropriate content for the target device. Unfortunately, many devices, including most mobile devices, do not support the "META" redirect tags.

Another solution or workaround would be to operate multiple proxy servers such that there is one for each type of supported client device; this solution is often described as supporting "channels" for the different devices. Unfortunately, this solution places an unreasonable resource and administrative requirement on a customer, i.e. the enterprise that is operating the web site. Moreover, this solution can appear unreasonable to customers when suggested by commercial partners who are attempting to sell the infrastructure to the customer.

A third solution would be to place a transcoding server in front of the proxy server that would render the HTML into the appropriate format for a given device. However, customers regard this as a security exposure because the transcoder must be deployed in the customer's computational DMZ (DeMilitarized Zone), which is a portion of a data processing system which is dedicated to addressing security concerns and which is usually devoid of content-related functionality because of the possibility of introducing security vulnerabilities. Therefore, a transcoding solution is unacceptable to most customers.

Yet another solution would be to send different content pages directly to different client types. Nearly all HTTP clients send within each request a small amount of information that identifies the client type and the data types that are understood by the client. For instance, a WAP-enabled (Wireless Application Protocol) mobile phone will send an "accept" header that includes "application/vnd.wap.wml" to indicate that it knows how to render WML (Wireless Markup Language) documents, while an i-mode™ phone will send an "accept" header of "text/chtml" to indicate that it prefers Compact-HTML documents. A proxy server can be configured so that, based on the contents of various HTTP headers, different client types would directly receive different kinds of documents. This solution is problematic, however, because the rapidly expanding variety of wireless devices and protocols renders this solution administratively impractical. Updates would be required on a constant basis to ensure that a particular vendor's device would be supported.

WO 02/073464 discloses a system and method for translating information in a processor-based system. The method comprises receiving a request by a user to access a target having an address and a memory with stored information, and modifying the address to redirect the request to an intermediary. The intermediary translates the stored translation having a list of words and their corresponding translations, to provide a first translation of the stored information.

GB 2331600 discloses the provision of customised content to a requesting client device using an intercepting agent based on the capabilities of the requesting client. The agent intercepts a request made by a requesting client device for a file from a web server. The agent detects client device capability information about the requesting client device, such as display or memory capabilities. The request is directed to a client smart agent which attempts to identify the client using the HTTP header information. If that is unsuccessful, the client smart agent downloads a client snooper agent to get the information about the client, which is necessary to choose the appropriate Web page. The client request is redirected to a URL according to the detected client capability information to retrieve an appropriate version of the requested file.

### SUMMARY OF THE INVENTION

According to a first aspect, there is provided a computer-implemented method for externalizing message handling within a data processing system, the method comprising: receiving at a first server from a client a request to access a resource; determining that the first server is unable to provide the client with access to the resource and that a response message is to be provided to the client instead;generating a redirect message that contains an operation code, wherein the operation code is operable to cause message handling functionality to be invoked at a second server to generate the response message for sending to the client; evaluating a configurable macro to determine an evaluated macro; inserting the evaluated macro into the redirect message; and sending the redirect message from the first server to the second server via the client.

There is preferably provided a method and an apparatus that provides messages for security-relevant events in a dynamic manner such that the content of the messages can be handled by the type of device that receives the message.

According to a second aspect, there is provided a computer program product on a computer readable storage medium for use within a data processing system for externalizing message handling, the computer program product comprising: means for receiving at a first server from a client a request to access a resource; means for determining that the first server is unable to provide the client with access to the resource and that a response message is to be provided to the client instead; means for generating a redirect message that contains an operation code , wherein the operation code is operable to cause message handling functionality to be invoked at a second server to generate the response message for sending to the client; means for evaluating a configurable macro to determine an evaluated macro; means for inserting the evaluated macro into the redirect message; and means for sending the redirect message from the first server to the second server via the client.

According to a third aspect, there is provided an apparatus for externalizing message handling within a data processing system, the apparatus comprising: means for receiving at a first server from a client a request to access a resource; mean for determining that the first server is unable to provide the client with access to the resource and that a response message is to be provided to the client instead; means for generating a redirect message that contains an operation code, wherein the operation code is operable to cause message handling functionality to be invoked at a second server to generate the response message for sending to the client means for evaluating a configurable macro to determine an evaluated macro;means for inserting the evaluated macro into the redirect message; and means for sending the redirect message from the first server to the second server via the client.

In accordance with a preferred embodiment there is provided a method for externalizing message handling within a data processing system is presented. A request to access a resource is received at a first server from a client. In response to determining at the first server that processing of the request requires a message to be sent to the client, a redirect message is generated that contains an operation code that corresponds to message handling functionality at a second server for the message to be sent to the client. A configurable macro is evaluated to determine an evaluated macro, and the evaluated macro is inserted into the redirect message. The redirect message is then sent from the first server to the second server via the client. The second server extracts the operation code from the redirect message and invokes the message handling functionality that corresponds to the extracted operation code. The second server extracts the evaluated macro from the redirect message and employs the evaluated macro at the second server as an input parameter for the message handling functionality.

### BRIEF DESCRIPTION OF THE DRAWINGS

Preferred embodiments of the present invention will now be described, by way of example only, and with reference to the following drawings:
**FIG. 1A** depicts a typical network of data processing systems, each of which may implement the present invention;
**FIG. 1B** depicts a typical computer architecture that may be used within a data processing system in which the present invention may be implemented;
**FIG. 2** depicts a block diagram that shows a typical enterprise data processing system;
**FIG. 3** depicts a dataflow diagram that shows a typical authentication process that may be used when a client attempts to access a protected resource at a server;
**FIG. 4** depicts a block diagram that shows a portion of a data processing system for performing externalized message handling in accordance with a preferred embodiment of the present invention;
**FIG. 5** depicts a block diagram that shows, in accordance with a preferred embodiment of the present invention, the contents of a redirect message from a proxy server to a message handling server;
**FIG. 6** depicts a block diagram that shows, in accordance with a preferred embodiment of the present invention, the contents of a message handling request from a proxy server to a message handling server;
**FIG. 7** depicts a block diagram that shows, in accordance with a preferred embodiment of the present invention, information that is used by the proxy server to generate a redirect message that is sent to a message handling server;
**FIG. 8** depicts a flowchart that shows, in accordance with a preferred embodiment of the present invention, a process at a proxy server for sending a request to a message handler server to generate a context-appropriate content message to be sent to a client in response to a client request for a resource that caused a detected event that requires the content message to be sent to the client;
**FIG. 9** depicts a flowchart that shows, in accordance with a preferred embodiment of the present invention, a process for creating a redirect message that contains a message handling request; and
**FIG. 10** depicts a flowchart that shows, in accordance with a preferred embodiment of the present invention, a process for creating an HTTP Redirect message using the "Location" header of the redirect message and query arguments within the URI of the "Location" header.

### DETAILED DESCRIPTION OF THE INVENTION

In general, the devices that may comprise or relate to the present invention include a wide variety of data processing technology. Therefore, as background, a typical organization of hardware and software components within a distributed data processing system is described prior to describing the present invention in more detail.

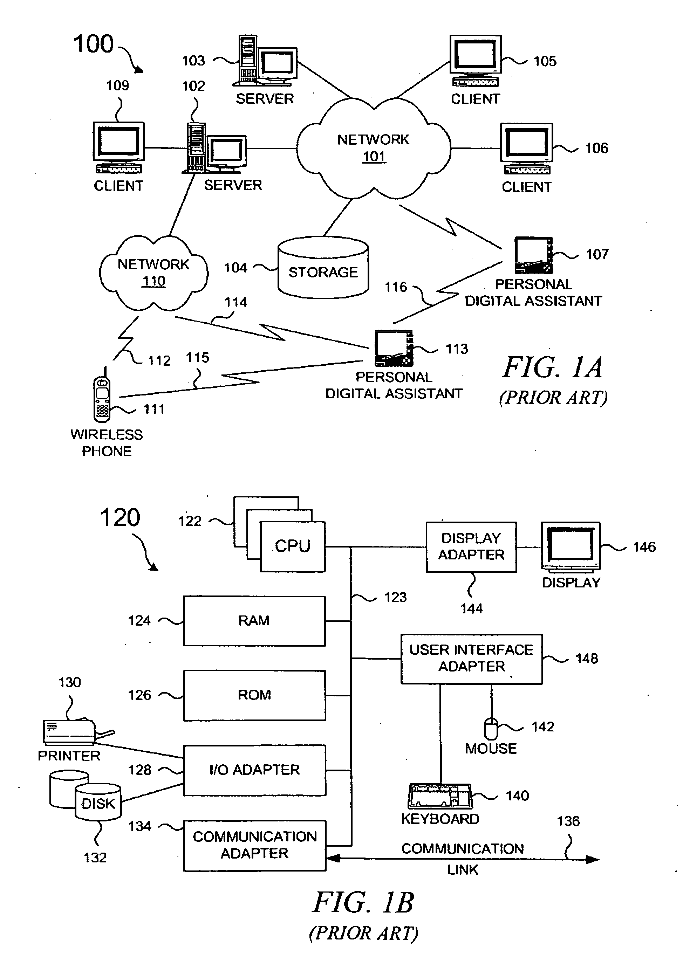

With reference now to the figures, **FIG. 1A** depicts a typical network of data processing systems, each of which may implement a portion of the present invention. Distributed data processing system **100** contains network **101**, which is a medium that may be used to provide communications links between various devices and computers connected together within distributed data processing system **100.** Network **101** may include permanent connections, such as wire or fiber optic cables, or temporary connections made through telephone or wireless communications. In the depicted example, server **102** and server **103** are connected to network **101** along with storage unit **104**. In addition, clients **105-107** also are connected to network **101**. Clients **105-107** and servers **102-103** may be represented by a variety of computing devices, such as mainframes, personal computers, personal digital assistants (PDAs), etc. Distributed data processing system **100** may include additional servers, clients, routers, other devices, and peer-to-peer architectures that are not shown.

In the depicted example, distributed data processing system **100** may include the Internet with network **101** representing a worldwide collection of networks and gateways that use various protocols to communicate with one another, such as Lightweight Directory Access Protocol (LDAP), Transport Control Protocol/Internet Protocol (TCP/IP), File Transfer Protocol (FTP), Hypertext Transport Protocol (HTTP), Wireless Application Protocol (WAP), etc. Of course, distributed data processing system **100** may also include a number of different types of networks, such as, for example, an intranet, a local area network (LAN), or a wide area network (WAN). For example, server **102** directly supports client **109** and network **110**, which incorporates wireless communication links. Network-enabled phone **111** connects to network **110** through wireless link **112**, and PDA **113** connects to network **110** through wireless link **114**. Phone **111** and PDA **113** can also directly transfer data between themselves across wireless link **115** using an appropriate technology, such as Bluetooth™ wireless technology, to create so-called personal area networks (PAN) or personal ad-hoc networks. In a similar manner, PDA **113** can transfer data to PDA **107** via wireless communication link **116**.

The present invention could be implemented on a variety of hardware platforms; **FIG. 1A** is intended as an example of a heterogeneous computing environment and not as an architectural limitation for the present invention.

With reference now to **FIG. 1B**, a diagram depicts a typical computer architecture of a data processing system, such as those shown in **FIG. 1A**, in which the present invention may be implemented. Data processing system **120** contains one or more central processing units (CPUs) **122** connected to internal system bus **123**, which interconnects random access memory (RAM) **124**, read-only memory **126**, and input/output adapter **128**, which supports various I/O devices, such as printer **130**, disk units **132**, or other devices not shown, such as an audio output system, etc. System bus **123** also connects communication adapter **134** that provides access to communication link **136**. User interface adapter **148** connects various user devices, such as keyboard **140** and mouse **142**, or other devices not shown, such as a touch screen, stylus, microphone, etc. Display adapter **144** connects system bus **123** to display device **146**.

Those of ordinary skill in the art will appreciate that the hardware in **FIG. 1B** may vary depending on the system implementation. For example, the system may have one or more processors, such as an Intel® Pentium®-based processor and a digital signal processor (DSP), and one or more types of volatile and non-volatile memory. Other peripheral devices may be used in addition to or in place of the hardware depicted in **FIG. 1B**. The depicted examples are not meant to imply architectural limitations with respect to the present invention. (Intel and Pentium are trademarks or registered trademarks of Intel Corporation or its subsidiaries in the United States and other countries.)

In addition to being able to be implemented on a variety of hardware platforms, the present invention may be implemented in a variety of software environments. A typical operating system may be used to control program execution within each data processing system. For example, one device may run a Unix^{®} operating system, while another device contains a simple Java^{™} runtime environment. A representative computer platform may include a browser, which is a well known software application for accessing hypertext documents in a variety of formats, such as graphic files, word processing files, Extensible Markup Language (XML), Hypertext Markup Language (HTML), Handheld Device Markup Language (HDML), Wireless Markup Language (WML), and various other formats and types of files. (Java and all Java-based trademarks and logos are trademarks of Sun Microsystems, Inc. in the United States, other countries, or both; UNIX is a registered trademark of The Open Group in the United States and other countries.)

The present invention may be implemented on a variety of hardware and software platforms, as described above with respect to **FIG. 1A** and **FIG. 1B**. More specifically, though, the present invention is directed to an improved data processing environment. Prior to describing the present invention in more detail, some aspects of typical data processing environments are described.

The descriptions of the figures herein may involve certain actions by either a client device or a user of the client device. One of ordinary skill in the art would understand that responses and/or requests to/from the client are sometimes initiated by a user and at other times are initiated automatically by a client, often on behalf of a user of the client. Hence, when a client or a user of a client is mentioned in the description of the figures, it should be understood that the terms "client" and "user" can be used interchangeably without significantly affecting the meaning of the described processes.

Certain computational tasks may be described hereinbelow as being performed by functional units. A functional unit may be represented by a routine, a subroutine, a process, a subprocess, a procedure, a function, a method, an object-oriented object, a software module, an applet, a plug-in, an ActiveX™ control, a script, or some other component of firmware or software for performing a computational task.

The descriptions of the figures herein may involve an exchange of information between various components, and the exchange of information may be described as being implemented via an exchange of messages, e.g., a request message followed by a response message. It should be noted that, when appropriate, an exchange of information between computational components, which may include a synchronous or asynchronous request/response exchange, may be implemented equivalently via a variety of data exchange mechanisms, such as messages, method calls, remote procedure calls, event signaling, or other mechanism.

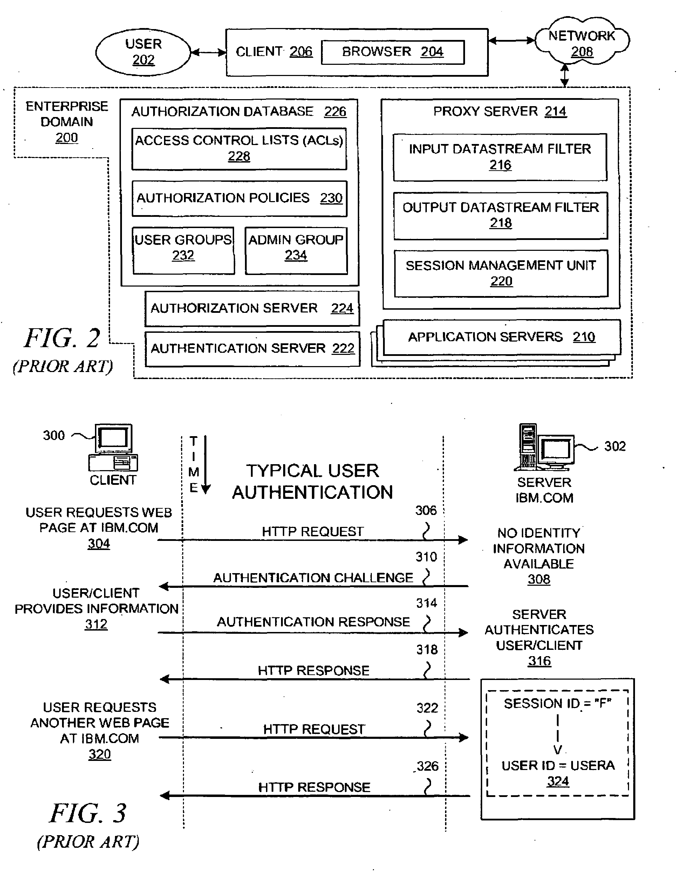

With reference now to **FIG. 2**, a block diagram depicts a typical enterprise data processing system. Whereas **FIG. 1A** depicts a typical data processing system with clients and servers, in contrast, **FIG. 2** shows a client within a network in relation to some of the server-side entities that may be used to support client requests to access resources. As in a typical computing environment, enterprise domain **200** hosts resources that user **202** can access, e.g., by using browser application **204** on client **206** through network **208**; the computer network may be the Internet, an intranet, or other network, as shown in **FIG. 1A**.

Enterprise domain **200** supports multiple servers. Application servers **210** support controlled and/or uncontrolled resources through web-based applications or other types of back-end applications, including legacy applications. Reverse proxy server **214**, or more simply, proxy server **214**, performs a wide range of functions for enterprise domain **200**. For example, proxy server **214** may cache web pages in order to mirror the content from an application server. Incoming and outgoing datastreams may be processed by input datastream filter **216** and output datastream filter **218**, respectively, in order to perform various processing tasks on incoming requests and outgoing responses in accordance with goals and conditions that are specified within various policies or in accordance with a configuration of deployed software modules.

Session management unit **220** manages session identifiers, cached credentials, or other information with respect to sessions as recognized by proxy server **214**. Web-based applications typically utilize various means to prompt users to enter authentication information, often as a username/password combination within an HTML form. In the example that is shown in **FIG. 2**, user **202** may be required to be authenticated before client **206** may have access to resources, after which a session is established for client **206**. In an alternative embodiment, authentication and authorization operations are not performed prior to providing a user with access to resources on domain **200**; a user session might be created without an accompanying authentication operation.

The above-noted entities within enterprise domain **200** represent typical entities within many computing environments. However, many enterprise domains have security features for controlling access to protected computational resources. A computational resource may be an application, an object, a document, a web page, a file, an executable code module, or some other computational resource or communication-type resource. A protected or controlled resource is a resource that is only accessible or retrievable if the requesting client or requesting user is authenticated and/or authorized; in some cases, an authenticated user is, by default, an authorized user. Authentication server **222** may support various authentication mechanisms, such as username/password, X.509 certificates, or secure tokens; multiple authentication servers could be dedicated to specialized authentication methods. Authorization server **224** may employ authorization database **226**, which contains information such as access control lists **228**, authorization policies **230**, information about user groups or roles **232**, and information about administrative users within a special administrative group **234**. Using this information, authorization server **224** provides indications to proxy server **214** whether a specific request should be allowed to proceed, e.g., whether access to a controlled resource should be granted in response to a request from client **206**. It should be noted that the present invention may be implemented in association with a variety of authentication and authorization applications, and the embodiments of the present invention that are depicted herein should not be interpreted as limiting the scope of the present invention with respect to a configuration of authentication and authorization services.

With reference now to **FIG. 3**, a data flow diagram illustrates a typical authentication process that may be used when a client attempts to access a protected resource at a server. As illustrated, the user at a client workstation **300** seeks access over a computer network to a protected resource on a server **302** through the user's web browser executing on the client workstation. A protected resource may be identified by a Uniform Resource Locator (URL), or more generally, a Uniform Resource Identifier (URI), that can only be accessed by an authenticated and authorized user.

The process is initiated when the user requests a server-side protected resource, such as a web page within the domain "ibm.com" (step **304**). The terms "server-side" and "client-side" refer to actions or entities at a server or a client, respectively, within a networked environment. The web browser (or associated application or applet) generates an HTTP request that is sent to the web server that is hosting the domain "ibm.com" (step **306**). The terms "request" and "response" should be understood to comprise data formatting that is appropriate for the transfer of information that is involved in a particular operation, such as messages, communication protocol information, or other associated information.

The server determines that it does not have an active session for the client (step **308**), so the server requires the user to perform an authentication process by sending the client some type of authentication challenge (step **310**). The authentication challenge may be in various formats, such as an HTML form. The user then provides the requested or required information (step **312**), such as a user identifier and an associated password, or the client may automatically return certain information, such as a digital certificate.

The authentication response information is sent to the server (step **314**), at which point the server authenticates the user or client (step **316**), e.g., by retrieving previously submitted registration information and matching the presented authentication information with the user's stored information. Assuming the authentication is successful, an active session is established for the authenticated user or client.

The server then retrieves the requested web page and sends an HTTP response message to the client (step **318**). At that point, the user may request another page within "ibm.com" (step **320**) within the browser by clicking a hypertext link, and the browser sends another HTTP request message to the server (step **322**). At that point, the server recognizes that the user has an active session based on session state information that is maintained by the server (step **324**). For example, the server recognizes the appropriate session state information for the requesting user because the user's client returns a session ID within the HTTP request message. Based on the cached user session information, the server determines that the user has already been authenticated, e.g., by the availability of a copy of the user's credentials; the server can then determine that certain operations, such as an authentication operation, is not required to be performed prior to fulfilling the user's request. The server sends the requested web page back to the client in another HTTP response message (step **326**), thereby fulfilling the user's original request for the protected resource.

For the purposes of background information, **FIG. 2** depicts a typical data processing system, and **FIG. 3** depicts a typical authentication process that may be used when a client attempts to access a protected resource at a server; although similar components and processes may be employed within a data processing system that supports the present invention, a preferred embodiment of the present invention is illustrated within the remaining figures and discussed with respect to those figures.

Specifically, the present invention is directed, in accordance with a preferred embodiment, to a method, an apparatus, a computer program product, or a system that provides appropriate messages or other context-appropriate content for security-relevant or other events in a dynamic manner such that the content can be handled by the type of device that receives the content. More specifically, there is provided in accordance with a preferred embodiment of present invention an improved infrastructure that externalizes message or content handling from a proxy server to a message handling server, as explained in more detail hereinbelow.

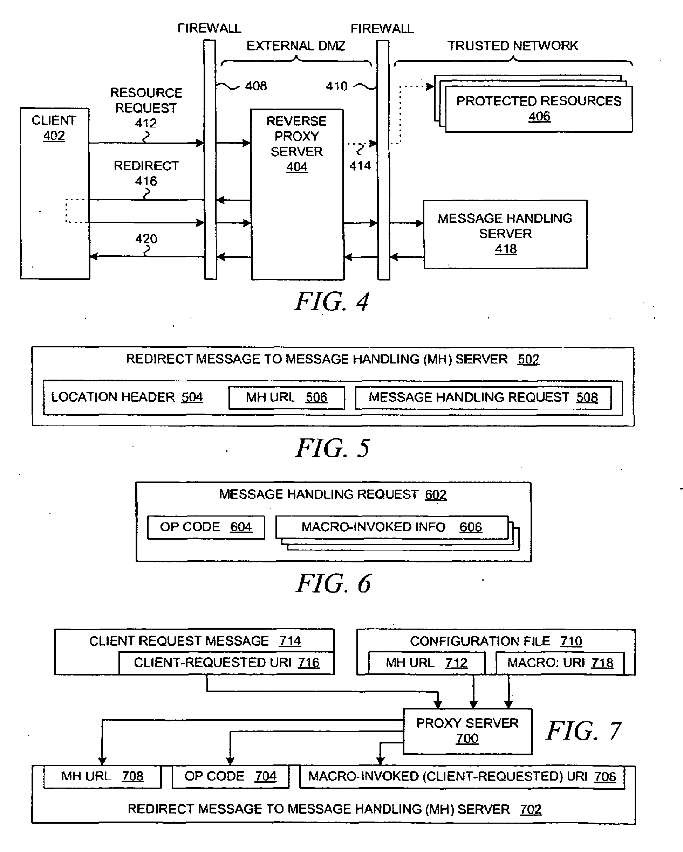

With reference now to **FIG. 4**, a block diagram depicts a portion of a data processing system for performing externalized message handling in accordance with an embodiment of the present invention. The data processing system that is shown in **FIG. 4** is similar to the data processing system that is shown in **FIG. 2****.** For example, within the two figures: client **402** is similar to client **206**; reverse proxy server **404** is similar to, yet an enhanced version of, proxy server **214**; and protected resources **406** may represent applications servers **210** and other types of protected resources.

Reverse proxy server **404** preferably resides within an computational DMZ (DeMilitarized Zone) such that data that is transmitted to and from reverse proxy server **404** must pass through firewalls **408** and **410**. Reverse proxy server **404** is responsible for session management with respect to user sessions that are created within a secure domain that comprises protected resources **406**.

Reverse proxy server **404** and protected resources **406** may reside within a trusted network, which may represent computational resources within an enterprise domain, e.g., similar to enterprise domain **200** as shown in **FIG. 2**.

**FIG. 4** illustrates some of the dataflow between a client/user and the components that support the protected resources that are accessed by the client/user. Moreover, **FIG. 4** illustrates components for discussing an implementation of the present invention in which dynamic message handling can be externalized from a proxy server to another server.

In many operational scenarios or transactions, a user of client **402** may have already completed an authentication process via proxy server **404** such that proxy server **404** has credentials for the user; proxy server **404** uses the credentials to provide the user with access to some protected resources **406**, e.g., when forwarding or sending a user's received request to protected resources **406**. In many instances, when proxy server **404** receives a request to access a protected resource and determines that the requesting user's credentials are sufficient, proxy server **404** processes the user's request without any error processing.

However, in the example that is shown in **FIG. 4****,** when resource request **412** is received by proxy server **404**, resource request **412** is not forwarded to protected resources **406**, e.g., as hypothetical forwarded request **414**. In this instance, proxy server **404** recognizes that resource request **412** is a request that cannot be fulfilled or otherwise performed for some reason, particularly because of the detection of some security-relevant event, an error-induced event, or some other type of problematic event. For example, proxy server **404** may recognize that the proxy server does not have credentials for the client/user that are required to access the protected resource, thereby determining that the user is required to perform a logon operation or similar authentication operation, e.g., through the successful submission of a logon form with a username and password.

Rather than attempting to return context-appropriate content to the client, e.g., such as a static HTML form, proxy server **404** instead sends redirect message **416** to client **402**, which forwards the redirect message to message handling server **418**; this redirect message contains information that allows message handling server **418** to assume the responsibility of sending context-appropriate content to client **402** in response to the original request from client **402**. Message handling server **418** dynamically generates and sends context-appropriate content **420** to client **402** based on information that was specifically included within redirect message **416** for message handling server **418** by proxy server **404**, as discussed in more detail hereinbelow.

With reference now to **FIG. 5**, a block diagram depicts the contents of a redirect message from a proxy server to a message handling server in accordance with an embodiment of the present invention. Message **502** represents a redirect message from the proxy server to the message handling server via the client device. Although message **502** may be formatted in a variety of implementation-specific manners, message **502** is preferably formatted as an HTTP "302" Redirect, which can be processed without error by most HTTP-enabled devices, including wireless or mobile devices. Redirect message **502** includes location header **504**, which contains the URI of the entity to which redirect message **502** is intended as a destination, which in this case is the message handling server. In the preferred embodiment, location header **504** comprises a base URL **506**, which represents the URL of the message handling server, along with a message handling request **508**, which represents the information that is being sent from the proxy server to the message handling server in order to perform a message generation task in response to a client request.

With reference now to **FIG. 6**, a block diagram depicts the contents of a message handling request from a proxy server to a message handling server in accordance with an embodiment of the present invention. Message handling request **602** is similar to message handling request **508** that is shown in **FIG. 5**. Message handling request **602** comprises an operation code, i.e. op code, **604** that indicates the operation or message generating function that the proxy server is requesting the message handling server to perform. Macro-invoked information **606** represents zero or more data items that are being provided by the proxy server to the message handling server in accordance with macros that may be configured at the proxy server. The evaluated macros may be employed by the message handling server to in the message generating function or in some other manner while generating the message.

With reference to **FIG. 7**, a block diagram depicts information that is used by the proxy server to generate a redirect message that is sent to a message handling server in accordance with an embodiment of the present invention. Some of the information items that are shown in **FIG. 7** simply reiterate elements that are shown in other figures. For example, redirect message **702** is similar to redirect message **502** in **FIG. 5**. Op code **704** is similar to op code **604** in **FIG. 6**, which comprises part of message handling request **508**. Macro-invoked URI **706** is similar to macro-invoked info **606** in **FIG. 6**, which is part of message handling request **508**.

Proxy server **700** accesses different datastores or sources of information for the data items that are used to build redirect message **702**. One of the datastores that proxy server **700** may access is configuration file **710**, which contains values for configurable variables that guide a wide variety of aspects of the processing of proxy server **700**, including the functionality of the preferred embodiment. Configuration file **710** contains message handling URL **712**, which may be stored as a name-value pair within the configuration file. When generating redirect message **702**, proxy server **700** copies the message handling server URL **712** as message handling URL **708**.

For example, the configuration file may contain the following string:
"local-response-redirect-uri = /ibmusa/jct/handler"

The string "local-response-redirect-uri" represents the name of the variable that represents the redirect URI for the message handling server. The string "/ibmusa/jct/handler" represents the value of that variable. Hence, the string "/ibmusa/jct/handler" is the value of MH URL **708** in redirect message **702**, and the string "/ibmusa/jct/handler" forms the base portion of the location URI in redirect message **702**.

Proxy server **700** may determine op code **704** in a variety of ways that may depend upon the implementation of the present invention. For example, op code **704** may be selected based on a security-related event notification or based on a detected error condition. Alternatively, op code **704** may be selected based on the information within client request message **714**, i.e. the original request message from the client that attempted to access a protected resource, particularly with respect to client-requested URI **716**. The manner in which proxy server **700** may determine op code **704** may be configurable through configuration file **710** (not shown in the figure); alternatively, it may be embedded within the source code logic of proxy server **700**, or proxy server **700** receives or retrieves the value in some other manner.

For example, if a client device attempts to access a logon resource, such as a logon web page, then op code **704** might be selected based on the particular URL **716** or based on its classification within a group of related resources. Thus, the value of the operation code may be equal to "LOGON", and op code **704** may be represented by a string "OP CODE=logon" that appears as a portion of the location URI in redirect message **702**. More specifically, op code **704** may be placed in the location URI in redirect message **702** as a query argument, as illustrated in more detail further below.

Proxy server **700** is directed to embed macro-invoked URI **706** within redirect message **702** based on the presence of macro **718** in configuration file **710**. In this example, macro **718** indicates that the originally requested URI is to be provided to the message handling server. Hence, proxy server **700** copies client-requested URI **716** into redirect message **702** as macro-invoked URI **706**.

For example, the configuration file may contain the string "macro = URI", which invokes proxy server **700** to include the originally requested URI into the message handling request. If the string "https://ibmUSA/jct/protected/" represents the originally request URI, then the string "URI=https://ibmUSA/jct/protected/" may be placed in redirect message **702** as a query argument in a portion of the location URI, as illustrated in more detail hereinbelow.

From a certain perspective, some aspects of the present invention in its preferred embodiment may be regarded as using the structure of the "Location" header of a redirect message as a type of API (application programming interface). Parameters are communicated from the proxy server to the message handling server using a defined interface. As illustrated in **FIG. 5**, the content within the "Location" header can be constructed of the following portions:
<MH URL> <OP CODE> {<MACRO-INVOKED INFO>}
"<MH URL> is a string that represents the URL of the message handling server.
"<OP CODE>" is a string that represents the operation code. "{<MAGRO-INVOKED INFO>}" are zero or more strings that represent the information items that are required by the presence of the macro variables within a configuration file.

In a preferred embodiment, the operation code and the macro-invoked information items are included within the "location" header of the redirect message as query arguments. Referring to the example above, "OP_CODE=logon" becomes a query argument. Assuming that "macro = URI" is a configured macro, then "https://ibmUSA/jct/protected/" becomes a query argument. Each of these strings becomes substrings within the string value that represents the entire "Location" header. Hence, following this example, the value of the "Location" header becomes (after performing some ASCII data formatting to adhere to protocol standards):
https://ibmUSA/jct/handler?OP_CODE=LOGON&URI=https%3A//ibmUSA/jct/prote cted/

The character "?" is a standard delimiter for distinguishing the query arguments from the base portion of the URI. The character "&" is a standard delimiter for appending an additional query argument. Following the same example, if the both the "macro = URI" and the "macro = username" were configured, and the user's username was 'jsmith", then the value of the "Location" header would be:
https://ibmUSA/jcdhandler?OP_CODE=LOGON&URL=https%3A//ibmUSA/jct/prote cted/&username=jsmith

The usemame might be retrieved from a session state variable, from a credential, from a user registry, or from some other datastore or data structure. If no macros were configured to be active, then the value of the "Location" header would be:
https://ibmUSA/jct/handler?OP_CODE=LOGON

The strings that represent the various operation codes may vary depending upon the implementation of the present invention. It should be noted that the information that is used by the proxy server for generating the message to the message handling server may originate from a variety of locations, including other locations that are not shown in the figure, such as data that is stored in the client's entry in the session cache, elements of the originally received HTTP request, values returned from an authentication engine, or some other location.

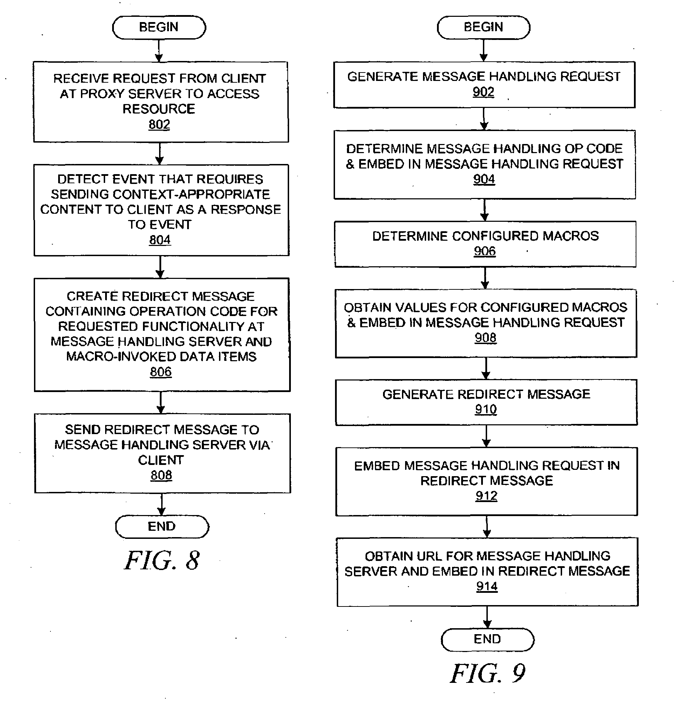

With reference now to **FIG. 8**, a flowchart depicts in accordance with a preferred embodiment a process at a proxy server for sending a request to a message handler server to generate a context-appropriate content message to be sent to a client in response to a client request for a resource that caused a detected event that requires the content message to be sent to the client in accordance with an embodiment of the present invention. The process commences when a proxy server receives a request from a client to access a resource or a protected resource (step **802**). During the processing of the received request, the proxy server detects, or is notified of, an event that the proxy server determines requires a transmission of context-appropriate content to the client as a response to the event (step **804**); for example, the context-appropriate content may be a message to the user of the client, such as an error message for the user's requested transaction or a logon invitation.

The proxy server creates a redirect message (step **806**); the redirect message contains information to be used by the message handling server that will receive the redirect message. The redirect message contains an operation code or op code for the functionality that the proxy server wants to invoke at a message handling server. The redirect message also contains data items that are placed into the redirect message based on specific macros with which the proxy server has been configured.. The proxy server then sends the redirect message to the message handling server via the client (step **808**), and the process is concluded.

With reference now to **FIG. 9**, a flowchart depicts in accordance with a preferred embodiment a process for creating a redirect message that contains a message handling request in accordance with an embodiment of the present invention. The process that is shown in **FIG. 9** provides additional detail for step **806** that is shown in **FIG. 8**. The process commences with the proxy server generating a message handling request (step **902**). An appropriate message handling op code is determined and then embedded within the message handling request (step **904**).

The proxy server then determines a list of macros that have been configured or activated (step **906**). A value is obtained for each of the configured macros; these values may be termed "evaluated macros", and the evaluated macros are embedded within the message handling request (step **908**).

A redirect message is then generated (step **910**), and the message handling request is embedded into the redirect message (step **912**). The URL of the message handling server is then retrieved and embedded into the redirect message (step **914**), thereby concluding the process.

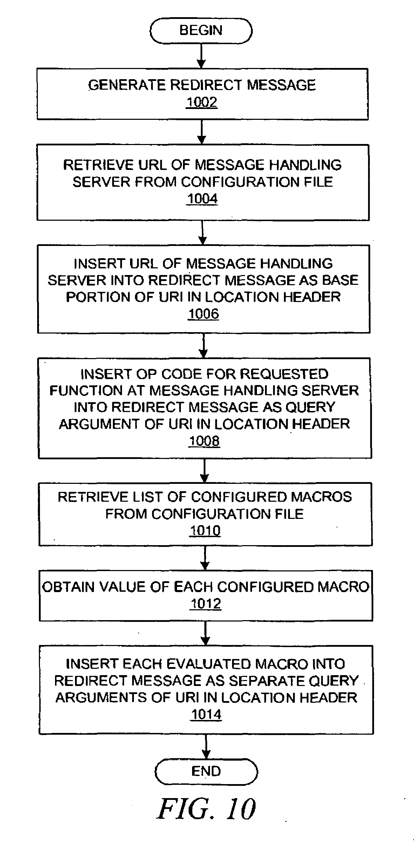

With reference now to **FIG. 10**, a flowchart depicts a process for creating an HTTP Redirect message using the "Location" header of the redirect message and query arguments within the URI of the "Location" header in accordance with an embodiment of the present invention. The process that is shown in **FIG. 10** is similar to the process that is shown in **FIG. 9**. However, the process that is shown in **FIG. 10** illustrates a specific preferred embodiment of a portion of the present invention in which a message handling request is formatted within an HTTP Redirect message.

The process commences with the generation of an HTTP Redirect message (step **1002**). The URL of the message handling server is retrieved from a configuration file (step **1004**) and inserted into the redirect message as a base portion of the URI in the "Location" header of the redirect message (step **1006**). After the proxy server determines the operation code or op code that will be interpreted by the message handling server as requesting a specific function at the message handling server, it is inserted into the redirect message as a query argument of the URI in the "Location" header of the redirect message (step **1008**).

A list of configured macros are then determined, e.g., by retrieval from a configuration file (step **1010**), and a value for each configured macro is obtained (step **1012**) in a manner that is appropriate for each macro. The value of each configured macro is then inserted into the redirect message as a query argument of the URI in the "Location" header of the redirect message (step **1014**), thereby concluding the process.

The advantages of the solution disclosed should be apparent in view of the detailed description provided above. As illustrated in **FIG. 4**, the proxy server sends a redirect message, e.g., an HTTP "302" Redirect, to the message handling server via the client device. Most client devices, including wireless devices, can handle HTTP "302" Redirects. Rather than generating an HTTP response body within the proxy server, clients are redirected to another server, which might be maintained by the customer/vendor for the devices that are supported by a particular installation. This back-end server, shown as message handling server **418** in **FIG. 4**, would then be responsible for determining the type of client device and generating an appropriate response. A principal advantage of the solution disclosed is that it completely removes the proxy server from.the generation of the context-appropriate content. Placing the responsibility for determining an appropriate response onto another server meets a customer-derived requirement to use server-side programming rather than client-side programming for generating content for login and error pages. The solution disclosed also provides a type of API through which parameters or variable values can be communicated from the proxy server to the message handling server in order to allow the message handling server to generate the context-appropriate content.

It is important to note that while the present invention has been described in the context of a fully functioning data processing system, those of ordinary skill in the art will appreciate that the processes of the present invention are capable of being distributed in the form of instructions in a computer readable medium and a variety of other forms, regardless of the particular type of signal bearing media actually used to carry out the distribution. Examples of computer readable media include media such as EPROM, ROM, tape, paper, floppy disc, hard disk drive, RAM, and CD-ROMs and transmission-type media, such as digital and analog communications links.

A method is generally conceived to be a self-consistent sequence of steps leading to a desired result. These steps require physical manipulations of physical quantities. Usually, though not necessarily, these quantities take the form of electrical or magnetic signals capable of being stored, transferred, combined, compared, and otherwise manipulated. It is convenient at times, principally for reasons of common usage, to refer to these signals as bits, values, parameters, items, elements, objects, symbols, characters, terms, numbers, or the like. It should be noted, however, that all of these terms and similar terms are to be associated with the appropriate physical quantities and are merely convenient labels applied to these quantities.

The description of the present invention has been presented for purposes of illustration but is not intended to be exhaustive or limited to the disclosed embodiments. Many modifications and variations will be apparent to those of ordinary skill in the art. The embodiments were chosen to explain the principles of the invention and its practical applications and to enable others of ordinary skill in the art to understand the invention in order to implement various embodiments with various modifications as might be suited to other contemplated uses.

The invention and its various embodiments can be summarised according to the following clauses:
1. A computer-implemented method for externalizing message handling within a data processing system, the method comprising:
   receiving at a first server from a client a request to access a resource;
   in response to determining at the first server that processing of the request requires a message to be sent to the client, generating a redirect message that contains an operation code that corresponds to message handling functionality at a second server for the message to be sent to the client;
   evaluating a configurable macro to determine an evaluated macro;
   inserting the evaluated macro into the redirect message; and
   sending the redirect message from the first server to the second server via the client.
2. The method of clause 1 further comprising:
   extracting at the second server the operation code from the redirect message; and
   invoking at the second server the message handling functionality that corresponds to the extracted operation code.
3. The method of clause 1 or 2 further comprising:
   extracting at the second server the evaluated macro from the redirect message; and
   employing the evaluated macro at the second server as an input parameter for the message handling functionality.
4. The method of clause 1, 2 or 3 further comprising:
   identifying a first configurable macro as corresponding to a URI (Uniform Resource Identifier) in the request from the client;
   extracting the URI from the request from the client; and
   evaluating the first configurable macro as equal to the extracted URI from the request from the client.
5. The method of clause 1, 2, 3 or 4 further comprising:
   inserting the operation code into the redirect message as a query argument of a URI in a "Location" header in the redirect message, wherein the redirect message is an HTTP (HyperText Transport Protocol) Redirect message.
6. The method of any preceding clause further comprising:
   inserting the evaluated macro into the redirect message as a query argument of a URI in a "Location" header in the redirect message, wherein the redirect message is an HTTP (HyperText Transport Protocol) Redirect message.
7. The method of any preceding clause further comprising:
   evaluating a set of configurable macros to determine a set of evaluated macros; and
   inserting the evaluated macros into the redirect message.
8. A computer program product on a computer readable storage medium for use within a data processing system for externalizing message handling, the computer program product comprising:
   means for receiving at a first server from a client a request to access a resource;
   means for generating a redirect message that contains an operation code that corresponds to message handling functionality at a second server for a message to be sent.to the client in response to determining at the first server that processing of the request requires the message to be sent to the client;
   means for evaluating a configurable macro to determine an evaluated macro;
   means for inserting the evaluated macro into the redirect message; and
   means for sending the redirect message from the first server to the second server via the client.
9. The computer program product of clause 8 further comprising:
   means for extracting at the second server the operation code from the redirect message; and
   means for invoking at the second server the message handling functionality that corresponds to the extracted operation code.
10. The computer program product of clause 8 or 9 further comprising:
   means for extracting at the second server the evaluated macro from the redirect message; and
   means for employing the evaluated macro at the second server as an input parameter for the message handling functionality.
11. The computer program product of clause 8, 9 or 10 further comprising:
   means for identifying a first configurable macro as corresponding to a URI (Uniform Resource Identifier) in the request from the client;
   means for extracting the URI from the request from the client; and
   means for evaluating the first configurable macro as equal to the extracted URI from the request from the client.
12. The computer program product of clause 8, 9, 10 or 11 further comprising:
   means for inserting the operation code into the redirect message as a query argument of a URI in a "Location" header in the redirect message, wherein the redirect message is an HTTP (HyperText Transport Protocol) Redirect message.
13. The computer program product of any of clauses 8 to 12 further comprising:
   means for inserting the evaluated macro into the redirect message as a query argument of a URI in a "Location" header in the redirect message, wherein the redirect message is an HTTP (HyperText Transport Protocol) Redirect message.
14. The computer program product of any of clauses 8 to 13 further comprising:
   means for evaluating a set of configurable macros to determine a set of evaluated macros; and
   means for inserting the evaluated macros into the redirect message.
15. An apparatus for externalizing message handling within a data processing system, the apparatus comprising:
   means for receiving at a first server from a client a request to access a resource;
   means for generating a redirect message that contains an operation code that corresponds to message handling functionality at a second server for a message to be sent to the client in response to determining at the first server that processing of the request requires the message to be sent to the client;
   means for evaluating a configurable macro to determine an evaluated macro;
   means for inserting the evaluated macro into the redirect message; and
   means for sending the redirect message from the first server to the second server via the client.
16. The apparatus of clause 15 further comprising:
   means for extracting at the second server the operation code from the redirect message; and
   means for invoking at the second server the message handling functionality that corresponds to the extracted operation code.
17. The apparatus of clause 15 or 16 further comprising:
   means for extracting at the second server the evaluated macro from the redirect message; and
   means for employing the evaluated macro at the second server as an input parameter for the message handling functionality.
18. The apparatus of any of clauses 15 to 17 further comprising:
   means for identifying a first configurable macro as corresponding to a URI (Uniform Resource Identifier) in the request from the client;
   means for extracting the URI from the request from the client; and
   means for evaluating the first configurable macro as equal to the extracted URI from the request from the client.
19. The apparatus of any of clauses 15 to 18 further comprising:
   means for inserting the operation code into the redirect message as a query argument of a URI in a "Location" header in the redirect message, wherein the redirect message is an HTTP (HyperText Transport Protocol) Redirect message.
20. The apparatus of any of clauses 15 to 19 further comprising:
   means for inserting the evaluated macro into the redirect message as a query argument of a URI in a "Location" header in the redirect message, wherein the redirect message is an HTTP (HyperText Transport Protocol) Redirect message.
21. The apparatus of any of clauses 15 to 20 further comprising:
   means for evaluating a set of configurable macros to determine a set of evaluated macros; and
   means for inserting the evaluated macros into the redirect message.
22. A computer program comprising program code means adapted to perform the method of any of clauses 1 to 7 when said program is run on a computer.

## Claims

1. A computer-implemented method for externalizing message handling within a data processing system, the method comprising:
receiving at a first server (404) from a client (402) a request (412) to access a resource;
determining that the first server is unable to provide the client with access to the resource and that a response message is to be provided to the client instead;
generating a redirect message (416) that contains an operation code (604), wherein the operation code is operable to cause message handling functionality to be invoked at a second server (418) to generate the response message for sending to the client;
evaluating a configurable macro to determine an evaluated macro;
inserting the evaluated macro into the redirect message; and
sending the redirect message from the first server to the second server via the client.

2. The method of claim 1 further comprising:
extracting at the second server (418) the operation code (604) from the redirect message; and
invoking at the second server the message handling functionality that corresponds to the extracted operation code.

3. The method of claim 1 or 2 further comprising:
extracting at the second server (418) the evaluated macro from the redirect message; and
employing the evaluated macro at the second server as an input parameter for the message handling functionality.

4. The method of claim 1, 2 or 3 further comprising:
identifying a first configurable macro as corresponding to a URI (Uniform Resource Identifier) in the request from the client;
extracting the URI from the request from the client; and
evaluating the first configurable macro as equal to the extracted URI from the request from the client.

5. The method of claim 1, 2, 3 or 4 further comprising:
inserting the operation code (604) into the redirect message as a query argument of a URI in a "Location" header in the redirect message, wherein the redirect message is an HTTP (HyperText Transport Protocol) Redirect message.

6. The method of any preceding claim further comprising:
inserting the evaluated macro into the redirect message as a query argument of a URI in a "Location" header in the redirect message, wherein the redirect message is an HTTP (HyperText Transport Protocol) Redirect message.

7. The method of any preceding claim further comprising:
evaluating a set of configurable macros to determine a set of evaluated macros; and
inserting the evaluated macros into the redirect message.

8. A computer program product on a computer readable storage medium for use within a data processing system for externalizing message handling, the computer program product comprising:
means for receiving at a first server (404) from a client (402) a request (412) to access a resource;
means for determining that the first server is unable to provide the client (402) with access to the resource and that a response message is to be provided to the client instead;
means for generating a redirect message (416) that contains an operation code (604), wherein the operation code is operable to cause message handling functionality to be invoked at a second server (418) to generate the response message for sending to the client;
means for evaluating a configurable macro to determine an evaluated macro;
means for inserting the evaluated macro into the redirect message; and
means for sending the redirect message from the first server to the second server via the client.

9. The computer program product of claim 8 further comprising:
means for extracting at the second server (418) the operation code (604) from the redirect message; and
means for invoking at the second server the message handling functionality that corresponds to the extracted operation code.

10. The computer program product of claim 8 or 9 further comprising:
means for extracting at the second server (418) the evaluated macro from the redirect message; and
means for employing the evaluated macro at the second server as an input parameter for the message handling functionality.

11. An apparatus for externalizing message handling within a data processing system, the apparatus comprising:
means for receiving at a first server (404) from a client (402) a request (412) to access a resource;
mean for determining that the first server is unable to provide the client with access to the resource and that a response message is to be provided to the client instead;
means for generating a redirect message (416) that contains an operation code, wherein the operation code is operable to cause message handling functionality to be invoked at a second server (418) to generate the response message for sending to the client;
means for evaluating a configurable macro to determine an evaluated macro;
means for inserting the evaluated macro into the redirect message; and
means for sending the redirect message from the first server to the second server via the client.

12. The apparatus of claim 11 further comprising:
means for extracting at the second server (418) the operation code (604) from the redirect message; and
means for invoking at the second server the message handling functionality that corresponds to the extracted operation code.

13. The apparatus of claim 11 or 12 further comprising:
means for extracting at the second server (418) the evaluated macro from the redirect message; and
means for employing the evaluated macro at the second server as an input parameter for the message handling functionality.

14. The apparatus of any of claims 11 to 13 further comprising:
means for identifying a first configurable macro as corresponding to a URI (Uniform Resource Identifier) in the request from the client;
means for extracting the URI from the request from the client; and
means for evaluating the first configurable macro as equal to the extracted URI from the request from the client.

15. A computer program comprising program code means adapted to perform the method of any of claims 1 to 7 when said program is run on a computer.

## Patentansprüche

1. Von einem Computer durchgeführtes Verfahren, um die Nachrichtenbehandlung in einem Datenverarbeitungssystem auszulagern, wobei das Verfahren Folgendes umfasst:
Empfangen an einem ersten Server (404) einer Anforderung (412) für den Zugriff auf eine Ressource von einem Client (402);
Feststellen, dass der erste Server nicht in der Lage ist, dem Client den Zugriff auf die Ressource zu gewähren und dass dem Client stattdessen eine Antwort-Nachricht bereitzustellen ist;
Erzeugen einer Umleitungs-Nachricht (416), die einen Operationscode (604) enthält, wobei die Funktion des Operationscodes darin besteht zu veranlassen, dass Funktionen zur Nachrichtenbehandlung an einem zweiten Server (418) aufgerufen werden, um die Antwortnachricht zum Senden an den Client zu erzeugen;
Auswerten eines konfigurierbaren Makros, um ein ausgewertetes Makro festzulegen;
Einfügen des ausgewerteten Makros in die Umleitungsnachricht; und
Senden der Umleitungsnachricht von dem ersten Server über den Client an den zweiten Server.

2. Verfahren nach Anspruch 1, das des Weiteren Folgendes umfasst:
an dem zweiten Server (418) Entnehmen des Operationscodes (604) aus der Umleitungsnachricht; und
an dem zweiten Server Aufrufen der Funktionen zur Nachrichtenbehandlung, die dem entnommenen Operationscode entsprechen.

3. Verfahren nach Anspruch 1 oder Anspruch 2, das des Weiteren Folgendes umfasst:
an dem zweiten Server (418) Entnehmen des ausgewerteten Makros aus der Umleitungsnachricht; und
an dem zweiten Server Verwenden des ausgewerteten Makros als einen Eingabeparameter für die Funktionen zur Nachrichtenbehandlung.

4. Verfahren nach Anspruch 1, 2 oder 3, das des Weiteren Folgendes umfasst:
Kennzeichnen eines ersten konfigurierbaren Makros als ein Makro, das einem einheitlichen Bezeichner für Ressourcen (Uniform Resource Identifier (URI)) in der Anforderung von dem Client entspricht;
Entnehmen des URI aus der Anforderung von dem Client; und
Auswerten des ersten konfigurierbaren Makros als ein Makro, das gleich dem URI ist, der der Anforderung von dem Client entnommen wurde.

5. Verfahren nach Anspruch 1, 2, 3 oder 4, das des Weiteren Folgendes umfasst:
Einfügen des Operationscodes (604) in die Umleitungsnachricht als ein Abfrageargument eines URI in einem Kopfbereich "Location" (Ort) in der Umleitungsnachricht, wobei die Umleitungsnachricht eine HTTP- (HyperText-Transport-Protocol-) Umleitungsnachricht ist.

6. Verfahren nach einem der vorhergehenden Ansprüche, das des Weiteren Folgendes umfasst:
Einfügen des ausgewerteten Makros in die Umleitungsnachricht als ein Abfrageargument eines URI in einem Kopfbereich "Location" in der Umleitungsnachricht, wobei die Umleitungsnachricht eine HTTP- (HyperText-Transport-Protocol-) Umleitungsnachricht ist.

7. Verfahren nach einem der vorhergehenden Ansprüche, das des Weiteren Folgendes umfasst:
Auswerten eines Satzes von konfigurierbaren Makros, um einen Satz von ausgewerteten Makros festzustellen; und
Einfügen der ausgewerteten Makros in die Umleitungsnachricht.

8. Computerprogrammprodukt auf einem computerlesbaren Speichermedium zur Verwendung in einem Datenverarbeitungssystem, um die Nachrichtenbehandlung auszulagern, wobei das Computerprogrammprodukt Folgendes umfasst:
ein Mittel, um an einem ersten Server (404) von einem Client (402) eine Anforderung (412) für den Zugriff auf eine Ressource zu empfangen;
ein Mittel, um festzustellen, dass der erste Server nicht in der Lage ist, dem Client (402) den Zugriff auf die Ressource zu gewähren und dass dem Client stattdessen eine Antwort-Nachricht bereitzustellen ist;
ein Mittel, um eine Umleitungs-Nachricht (416) zu erzeugen, die einen Operationscode (604) enthält, wobei die Funktion des Operationscodes darin besteht zu veranlassen, dass Funktionen zur Nachrichtenbehandlung an einem zweiten Server (418) aufgerufen werden, um die Antwortnachricht zum Senden an den Client zu erzeugen;
ein Mittel, um ein konfigurierbares Makro auszuwerten, um ein ausgewertetes Makro festzulegen;
ein Mittel, um das ausgewertete Makro in die Umleitungsnachricht einzufügen; und
ein Mittel, um die Umleitungsnachricht von dem ersten Server über den Client an den zweiten Server zu senden.

9. Computerprogrammprodukt nach Anspruch 8, das des Weiteren Folgendes umfasst:
ein Mittel, um der Umleitungsnachricht den Operationscode (604) an dem zweiten Server (418) zu entnehmen; und
ein Mittel, um an dem zweiten Server Funktionen zur Nachrichtenbehandlung aufzurufen, die dem entnommenen Operationscode entsprechen.

10. Computerprogrammprodukt nach Anspruch 8 oder Anspruch 9, das des Weiteren Folgendes umfasst:
ein Mittel, um der Umleitungsnachricht das ausgewertete Makro an dem zweiten Server (418) zu entnehmen; und
ein Mittel, um das ausgewertete Makro an dem zweiten Server als einen Eingabeparameter für die Funktionen zur Nachrichtenbehandlung zu verwenden.

11. Vorrichtung, um die Nachrichtenbehandlung in einem Datenverarbeitungssystem auszulagern, wobei die Vorrichtung Folgendes umfasst:
ein Mittel, um an einem ersten Server (404) von einem Client (402) eine Anforderung (412) für den Zugriff auf eine Ressource zu empfangen;
ein Mittel, um festzustellen, dass der erste Server nicht in der Lage ist, dem Client den Zugriff auf die Ressource zu gewähren und dass dem Client stattdessen eine Antwort-Nachricht bereitzustellen ist;
ein Mittel, um eine Umleitungs-Nachricht (416) zu erzeugen, die einen Operationscode enthält, wobei die Funktion des Operationscodes darin besteht zu veranlassen, dass Funktionen zur Nachrichtenbehandlung an einem zweiten Server (418) aufgerufen werden, um die Antwortnachricht zum Senden an den Client zu erzeugen;
ein Mittel, um ein konfigurierbares Makro auszuwerten, um ein ausgewertetes Makro festzulegen;
ein Mittel, um das ausgewertete Makro in die Umleitungsnachricht einzufügen; und
ein Mittel, um die Umleitungsnachricht von dem ersten Server über den Client an den zweiten Server zu senden.

12. Vorrichtung nach Anspruch 11, die des Weiteren Folgendes umfasst:
ein Mittel, um der Umleitungsnachricht den Operationscode (604) an dem zweiten Server (418) zu entnehmen; und
ein Mittel, um an dem zweiten Server Funktionen zur Nachrichtenbehandlung aufzurufen, die dem entnommenen Operationscode entsprechen.

13. Vorrichtung nach Anspruch 11 oder Anspruch 12, die des Weiteren Folgendes umfasst:
ein Mittel, um der Umleitungsnachricht das ausgewertete Makro an dem zweiten Server (418) zu entnehmen; und
ein Mittel, um das ausgewertete Makro an dem zweiten Server als einen Eingabeparameter für die Funktionen zur Nachrichtenbehandlung zu verwenden.

14. Vorrichtung nach einem der Ansprüche 11 bis 13, die des Weiteren Folgendes umfasst:
ein Mittel, um ein erstes konfigurierbares Makro als ein Makro zu kennzeichnen, das einem einheitlichen Bezeichner für Ressourcen (Uniform Resource Identifier (URI)) in der Anforderung von dem Client entspricht;
ein Mittel, um der Anforderung von dem Client den URI zu entnehmen; und
ein Mittel, um das erste konfigurierbare Makro als ein Makro auszuwerten, das gleich dem URI ist, der der Anforderung von dem Client entnommen wurde.

15. Computerprogramm, das ein Programmcode-Mittel umfasst, welches so ausgelegt ist, dass es das Verfahren nach einem der Ansprüche 1 bis 7 durchführt, wenn das Programm auf einem Computer ausgeführt wird.

## Revendications

1. Procédé réalisé par ordinateur destiné à externaliser le traitement des messages dans un système de traitement de données, le procédé comprenant de :
recevoir, au niveau d'un premier serveur (404), depuis un client (402), une demande (412) pour accéder à une ressource ;
déterminer que le premier serveur est incapable de fournir au client un accès à la ressource et qu'un message de réponse doit être fourni au client à la place ;
générer un message de redirection (416) qui contient un code d'opération (604), dans lequel le code d'opération peut être utilisé pour amener la fonctionnalité de traitement des messages à être invoquée au niveau d'un second serveur (418) pour générer le message de réponse à envoyer au client ;
évaluer une macro configurable afin de déterminer une macro évaluée ;
insérer la macro évaluée dans le message de redirection ; et
envoyer le message de redirection à partir du premier serveur au second serveur via le client.

2. Procédé selon la revendication 1, comprenant en outre de :
extraire, au niveau du second serveur (418), le code d'opération (604) du message de redirection ; et
invoquer, au niveau du second serveur, la fonctionnalité de traitement des messages qui correspond au code d'opération extrait.

3. Procédé selon la revendication 1 ou 2, comprenant en outre de :
extraire, au niveau du second serveur (418), la macro évaluée du message de redirection ;
et
employer la macro évaluée, au niveau du second serveur, en tant que paramètre d'entrée pour la fonctionnalité de traitement des messages.

4. Procédé selon la revendication 1, 2 ou 3, comprenant en outre de :
identifier une première macro configurable comme correspondant à un URI (identificateur de ressource uniforme) dans la demande du client ;
extraire l'URI de la demande du client ; et
évaluer la première macro configurable comme égale à l'URI extrait de la demande du client.

5. Procédé selon la revendication 1, 2, 3 ou 4, comprenant en outre de :
insérer le code d'opération (604) dans le message de redirection en tant qu'argument de requête d'un URI dans un en-tête "Location" du message de redirection, dans lequel le message de redirection est un message de redirection HTTP (Protocole de transfert hypertexte).

6. Procédé selon l'une quelconque des revendications précédentes, comprenant en outre de :
insérer la macro évaluée dans le message de redirection en tant qu'argument de requête d'un URI dans un en-tête "Location" du message de redirection, dans lequel le message de redirection est un message de redirection HTTP (Protocole de transfert hypertexte).

7. Procédé selon l'une quelconque des revendications précédentes, comprenant en outre de :
évaluer un ensemble de macros configurables afin de déterminer un ensemble de macros évaluées ; et
insérer les macros évaluées dans le message de redirection.

8. Produit-programme d'ordinateur sur un support de stockage lisible par ordinateur destiné à être utilisé dans un système de traitement de données pour externaliser le traitement des messages, le produit-programme d'ordinateur comprenant :
un moyen destiné à recevoir, au niveau d'un premier serveur (404), depuis un client (402), une demande (412) pour accéder à une ressource ;
un moyen destiné à déterminer que le premier serveur est incapable de fournir au client (402) un accès à la ressource et qu'un message de réponse doit être fourni au client à la place ;
un moyen destiné à générer un message de redirection (416) qui contient un code d'opération (604), dans lequel le code d'opération peut être utilisé pour amener une fonctionnalité de traitement des messages à être invoquée au niveau d'un second serveur (418) pour générer le message de réponse à envoyer au client ;
un moyen destiné à évaluer une macro configurable afin de déterminer une macro évaluée ;
un moyen destiné à insérer la macro évaluée dans le message de redirection ; et
un moyen destiné à envoyer le message de redirection à partir du premier serveur au second serveur via le client.

9. Produit programme d'ordinateur selon la revendication 8, comprenant en outre :
un moyen destiné à extraire, au niveau du second serveur (418), le code d'opération (604) du message de redirection ; et
un moyen destiné à invoquer, au niveau du second serveur, la fonctionnalité de traitement des messages qui correspond au code d'opération extrait.

10. Produit programme d'ordinateur selon la revendication 8 ou 9, comprenant en outre :
un moyen destiné à extraire, au niveau du second serveur (418), la macro évaluée du message de redirection ; et
un moyen destiné à employer la macro évaluée, au niveau du second serveur, en tant que paramètre d'entrée pour la fonctionnalité de traitement des messages.

11. Dispositif pour externaliser le traitement des messages dans un système de traitement de données, le dispositif comprenant :
un moyen destiné à recevoir, au niveau d'un premier serveur (404), depuis un client (402), une demande (412) pour accéder à une ressource ;
un moyen destiné à déterminer que le premier serveur est incapable de fournir au client un accès à la ressource et qu'un message de réponse doit être fourni au client à la place ;
un moyen destiné à générer un message de redirection (416) qui contient un code d'opération, dans lequel le code d'opération peut être utilisé pour amener la fonctionnalité de traitement des messages à être invoquée au niveau d'un second serveur (418) pour générer le message de réponse à envoyer au client ;
un moyen destiné à évaluer une macro configurable afin de déterminer une macro évaluée ;
un moyen destiné à insérer la macro évaluée dans le message de redirection ; et
un moyen destiné à envoyer le message de redirection à partir du premier serveur au second serveur via le client.

12. Dispositif selon la revendication 11, comprenant en outre :
un moyen destiné à extraire, au niveau du second serveur (418), le code d'opération (604) du message de redirection ; et
un moyen destiné à invoquer, au niveau du second serveur, la fonctionnalité de traitement des messages qui correspond au code d'opération extrait.

13. Dispositif selon la revendication 11 ou 12, comprenant en outre :
un moyen destiné à extraire, au niveau du second serveur (418), la macro évaluée du message de redirection ; et
un moyen destiné à employer la macro évaluée, au niveau du second serveur, en tant que paramètre d'entrée pour la fonctionnalité de traitement des messages.

14. Dispositif selon l'une quelconque des revendications 11 à 13, comprenant en outre :
un moyen destiné à identifier une première macro configurable comme correspondant à un URI (identificateur de ressource uniforme) dans la demande du client ;
un moyen destiné à extraire l'URI de la demande du client ; et
un moyen destiné à évaluer la première macro configurable comme égale à l'URI extrait de la demande du client.

15. Programme d'ordinateur comprenant un moyen de code de programme conçu pour exécuter le procédé selon l'une quelconque des revendications 1 à 7, lorsque ledit programme est exécuté sur un ordinateur.
